## Europäisches Patentamt

## European Patent Office

## Office européen des brevets

(19)

(11) Veröffentlichungsnummer: **0 199 027 B1**

(12)

# EUROPÄISCHE PATENTSCHRIFT

(45) Veröffentlichungstag der Patentschrift:
03.05.89

(21) Anmeldenummer: **86102712.6**

(22) Anmeldetag: **01.03.86**

(51) Int. Cl.⁴: **A 61 C 17/02**, B 05 B 1/00

(54) **Spritzdüsenkopfteil für das Handstück eines Mundspülgerätes.**

(30) Priorität: **25.03.85 DE 3510767**

(43) Veröffentlichungstag der Anmeldung:
**29.10.86 Patentblatt 86/44**

(45) Bekanntmachung des Hinweises auf die Patenterteilung:
**03.05.89 Patentblatt 89/18**

(84) Benannte Vertragsstaaten:
**AT BE DE FR GB IT LU NL SE**

(56) Entgegenhaltungen:
EP-A- 0 052 736
DE-A- 2 543 749
DE-A- 2 746 453
DE-A- 3 101 941
DE-A- 3 304 092
FR-A- 2 278 404
FR-A- 2 433 335

(73) Patentinhaber: **Blendax GmbH, Rheinallee 88, D-6500 Mainz (DE)**

(72) Erfinder: **Membrado-Margeli, Miguel, Wiesbadener Strasse 84, D-6240 Königstein (DE)**

ACTORUM AG

## Beschreibung

Die Erfindung betrifft ein Spritzdüsenkopfteil für das Handstück eines Mundspülgerätes gemäß dem ersten Teil von Anspruch 1.

Aus der DE-C-3 044 025 ist ein Handstück für ein Mundspülgerät bekannt, das die Merkmale des Oberbegriffs des Anspruchs 1 aufweist.

Aus der DE-A-3 101 941 ist ein Handstück für ein Mund- und Zahnspritzgerät bekannt; auch hierbei weist das Handstück ein Mundstück und einen Spritzdüsenkopfteil auf, der sowohl mit einer Einzelstrahlspritzdüse als auch mit einem Kranz von Spritzdüsen versehen ist. Mittels eines Schiebeschalters erfolgt die Umschaltung von Einzelstrahlspritzungen auf Mehrstrahlspritzung.

Aus der DE-A-3 304 092 ist ein Handstück für Mundspülgeräte bekannt, das ebenfalls die Merkmale des Oberbegriffs des Anspruchs 1 aufweist. Dieses Handstück weist eine andersgeartete Steuervorrichtung zum Umschalten von Einzelstrahlspritzung auf Mehrstrahlspritzung auf.

Allen angeführten Handstücken für Mundspülgeräte ist gemeinsam, daß die Einzelstrahldüse und der mehrstrahlige Düsenkranz in Längserstreckung des Handstücks hintereinander angeordnet sind. Hierdurch vergrößern sich die Abmessungen des Spritzdüsenkopfes, was die Handhabung im Mundraum, insbesondere bei der Reinigung der lingualen Zahnflächen, erschwert.

Die FR-A-2 433 335 betrifft eine gattungsfremde, beim Zahnarzt einzusetzende Einrichtung zur Applikation von Abrasivteilchen mittels eines Gasstroms mit dem Ziel der Zahnreinigung, wobei auch die Möglichkeit eines gleichzeitigen Wasserstroms durch eine parallellaufende getrennte Zuleitung vorgesehen ist. Diese Vorrichtung steht hinsichtlich Aufgabenstellung und -lösung mit der vorliegenden Erfindung in keinem näheren Zusammenhang.

Aufgabe der Erfindung ist es, ein Spritzdüsenkopfteil der eingangs genannten Art dahingehend zu verbessern, daß die Abmessungen des Spritzdüsenkopfes verringert und damit die Zugänglichkeit, insbesondere zu den lingualen Zahnflächen, erleichtert wird, was letzten Endes eine Verbesserung der Reinigungswirkung mit sich bringt.

Diese Aufgabe wird durch einen Spritzdüsenkopfteil mit den Merkmalen des Patentanspruchs 1 gelöst.

Durch die Anordnung der Düsenachsen in einer Ebene, die senkrecht zur Längserstreckung des Rohrteils angeordnet ist, werden die Längsabmessungen des Spritzdüsenkopfes erheblich verringert, so daß die Zugänglichkeit in den hinteren Mundhöhlenraum verbessert wird. Damit lassen sich auch die Zahnflächen im lingualen Bereich besser reinigen. Da die Zentralachsen in einer Ebene liegen, braucht der Düsenkopf beim Umschalten vom Einstrahl- auf Mehrstrahlbetrieb nicht erneut in der Mundhöhle zentriert werden, wenn der gleiche Zahnflächenbereich einmal mit einem Strahl und dann mit einem Mehrfachstrahl oder umgekehrt behandelt werden soll. Dies erleichtert die Handhabung des Gerätes und beschleunigt den Reinigungsvorgang. Die Anordnung der Einzeldüse und des Düsenkranzes an entgegengesetzten Stellen des Düsenkopfes erfordert eine einfache Drehung um 180°, um die jeweils andere Düse in Einsatzstellung zu bringen.

Höhenverschiebungen des gesamten Handstücks wie beim Stand der Technik sind nicht mehr notwendig.

Nachstehend wird die Erfindung an einem Ausführungsbeispiel unter Bezug auf eine Zeichnung, die einen schematischen Querschnitt durch das obere Ende eines Spritzdüsenkopfteils für das Handstück eines Mundspülgerätes zeigt, näher erläutert.

Das Spritzdüsenkopfteil 1 besteht aus einem Rohrteil 2, an dessen einem Ende ein Spritzdüsenkopf 3 und an dessen anderem Ende eine nicht dargestellte Steckvorrichtung zur Verbindung mit einem Halteteil angeordnet ist. Im Rohrteil 2 sind zwei zueinander parallele Kanäle 4 und 5 ausgeführt. Der eine Kanal 4 mündet im Spritzdüsenkopf 3 in einer einstrahligen Spritzdüse 6. Der zweite Kanal 5 mündet im Spritzdüsenkopf 3 in einem mehrstrahligen Spritzdüsenkranz 7. Der Spritzdüsenkranz 7 weist mehrere, auf einem Kreis angeordnete Düsenöffnungen auf. Der mehrstrahlige Spritzdüsenkranz 7 kann eine beliebige bekannte Gestalt aufweisen. Eine vorteilhaft zu verwendende mehrstrahlige Spritzdüse ist aus dem Anspruch 2 der DE-C-3 044 025 bekannt.

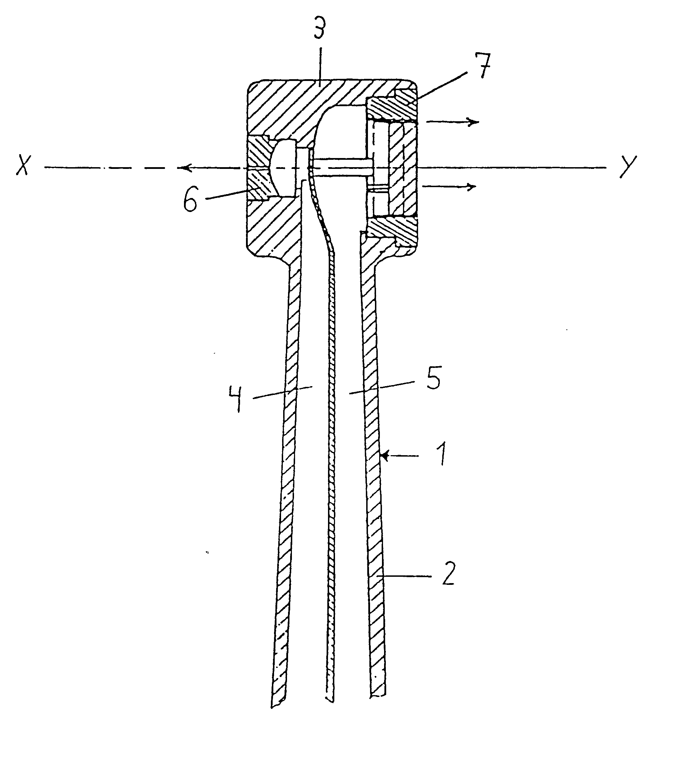

Die Zentralachse X der einstrahligen Spritzdüse 6 und die Zentralachse Y des mehrstrahligen Spritzdüsenkranzes 7 liegen in einer Ebene, die senkrecht zur Längserstreckung des Rohrteils 2 liegt. Die Öffnung der einstrahligen Spritzdüse 6 weist in die entgegengesetzte Richtung wie die Öffnungen des mehrstrahligen Spritzdüsenkranzes 7, was in der Figur durch Pfeile angedeutet ist. Die Zentralachsen X und Y schließen somit einen Winkel von 180° ein.

Wenn die Flüssigkeitszufuhr vom Kanal 4 auf den Kanal 5 und somit vom Einstrahl- auf Mehrstrahlbetrieb umgeschaltet ist, braucht das Handstück lediglich um 180° gedreht zu werden, um den gleichen Zahnflächenbereich behandeln zu können.

Die Drehbewegung um 180° kann auf den Spritzdüsenkopfteil 1, gegebenenfalls durch Anschläge begrenzt, beschränkt werden. Hierbei kann der Spritzdüsenkopfteil 1 gleichzeitig als Umschalter dienen, wobei in der Endstellung die einstrahlige Spritzdüse 6, in der anderen Endstellung der mehrstrahlige Spritzdüsenkranz 7 an die Flüssigkeitszufuhr im Halteteil des Handstücks des Mundspülgerätes angeschlossen ist, wobei in einer Zwischenstellung die Flüssigkeitszufuhr in den Spritzdüsenkopfteil unterbrochen werden kann. Hierbei bräuchte der Halteteil nur einen einzigen Flüssigkeitszufuhrkanal aufweisen.

## Patentanspruch

Spritzdüsenkopfteil für das Handstück eines Mundspülgerätes, wobei das gegebenenfalls aufsteckbare Spritzdüsenkopfteil (1), welches aus einem Spritzdüsenkopf (3) und einem Rohrteil (2) gebildet ist, mit zwei Flüssigkeitskanälen (4, 5) ausgestattet ist, von denen der eine in einer einstrahligen, im Spritzdüsenkopf (3) angeordneten Spritzdüse (6) und der andere in einem mehrstrahligen, im Spritzdüsenkopf (3) angeordneten Spritzdüsenkranz (7) mündet, und wobei alternativ einer der Kanäle (4 oder 5) mittels einer Umschaltvorrichtung mit einem Flüssigkeitseinlaß verbindbar ist, dadurch gekennzeichnet, daß die Zentralachse (X) der einstrahligen Spritzdüse (6) und die Zentralachse (Y) des mehrstrahligen Spritzdüsenkranzes (7) in einer Ebene im Spritzdüsenkopf (3) liegen, die senkrecht zur Längserstreckung des Rohrteils (2) angeordnet ist, und daß die Zentralachsen (X, Y) einen Winkel von 180° einschließen, wobei die Düsenausgangsöffnung der einstrahligen Spritzdüse (6) und die Düsenausgangsöffnungen des mehrstrahligen Spritzdüsenkranzes (7) in entgegengesetzte Richtungen weisen.

**Claim**

Spray nozzle head element for the handpiece of a mouthrinsing device, wherein the optionally attachable spray nozzle head element (1), which is formed by a spray nozzle head (3) and a tubular member (2), is provided with two liquid channels (4, 5), one of which leads to a single-jet spray nozzle (6) arranged in the spray nozzle head (3) and the other of which leads to a multi-jet spray nozzle ring (7) arranged in the spray nozzle head (3), and wherein alternatively one of the channels (4 or 5) can be connected to a liquid inlet by means of a switching device, characterised in that the central axis (X) of the single-jet spray nozzle (6) and the central axis (Y) of the multi-jet spray nozzle ring (7) lie in a plane in the spray nozzle head (3) that is perpendicular to the length of the tubular member (2), and that the central axes (X, Y) include an angle of 180°, the nozzle outlet opening of the single-jet spray nozzle (6) and the nozzle outlet openings of the multi-jet spray nozzle ring (7) pointing in opposite directions.

**Revendication**

Elément de tête de pulvérisation pour la partie tenue à la main d'un appareil de rinçage buccal, dans lequel l'élément de tête de pulvérisation (1) éventuellement emmanchable, qui est formé d'une tête de pulvérisation (3) et d'une partie tubulaire (2), et qui est équipé de deux canaux à liquide (4, 5), dont l'un débouche dans un ajutage de pulvérisation (6) à jet unique, agencé dans la tête de pulvérisation (3), et l'autre dans une couronne d'ajutages de pulvérisation (7) à jets multiplés, angencée dans la tête de pulvérisation (3), et dans lequel alternativement un des canaux (4 ou 5) peut être relié au moyen d'un dispositif de commutation à une entrée de liquide, caractérisé en ce que l'axe central (X) de l'ajutage de pulvérisation à jet unique (6) et l'axe central (Y) de la couronne d'ajutages de pulvérisation (7) à jets multiples sont situés dans la tête de pulvérisation (3) dans un plan qui est disposé perpendiculairement à l'extension longitudinale de la partie tubulaire (2) et en ce que les axes centraux (X, Y) forment un angle de 180°, l'orifice de sortie de l'ajutage de pulvérisation à jet unique (6) et les orifices de sortie de la couronne d'ajutages de pulvérisation (7) à jets multiples étant orientés dans des sens opposés.